# EUROPÄISCHE PATENTSCHRIFT

(11) **EP 2 144 686 B1**
(45) Veröffentlichungstag und Bekanntmachung des Hinweises auf die Patenterteilung: **29.12.2010**
(21) Anmeldenummer: 08748914.2
(22) Anmeldetag: 15.04.2008
(51) Int. Cl.: B01D 46/24, B01D 46/52

(54) **FILTERELEMENT FÜR EIN KOALESZENZFILTER**
FILTER ELEMENT FOR A COALESCING FILTER
ÉLÉMENT FILTRANT POUR UN FILTRE À COALESCENCE

(30) Priorität: 16.04.2007 DE 202007005552 U
(43) Veröffentlichungstag der Anmeldung: 20.01.2010
(73) Patentinhaber: Donaldson Filtration Deutschland GmbH, 42781 Haan (DE)
(72) Erfinder: SCHUSTER, Hans-Michael, 42781 Haan (DE)
(74) Vertreter: Tilmann, Max Wilhelm
(86) Internationale Anmeldenummer: PCT/EP2008/002972
(87) Internationale Veröffentlichungsnummer: WO 2008/125333

(56) Entgegenhaltungen:
- EP-A- 0 278 772
- EP-A- 0 695 572
- DE-A1- 19 520 504
- US-A- 4 233 042
- US-A1- 2005 092 179

## Beschreibung

Die Erfindung betrifft Filter zur Öl- oder Kondensatabscheidung aus Druckluft oder Gasen, wie sie beispielsweise in der Instrumentenluftversorgung oder bei der Anlagendrucklufttechnik zur Aerosolabscheidung aus Gasen eingesetzt werden. Diese Filter sind als Koaleszenzfilter bekannt.

Bei der Mehrzahl der im Stand der Technik bekannten Koaleszenzfilter handelt es sich um Filtervorrichtungen mit einem außenliegenden Koaleszenzmantel. Dieser Koaleszenzmantel hat die Aufgabe, die von dem eigentlichen Filtermaterial aufgefangenen Flüssigkeits- oder Öltröpfchen weiter zu vereinen und einer gemeinsamen Ableitung zuzuführen. Der Koaleszenzmantel umgibt typischerweise einen Stützmantel aus gitterartigem durchlässigen und im Wesentlichen festen Material.

Ein außenliegender Koaleszenzmantel hat jedoch Nachteile bei der Herstellung des Koaleszenzfilters. So kann beispielsweise das enge Aufziehen des Mantels auf den festen Stützmantel problematisch sein, wenn das Koaleszenzmaterial sehr fest ist; bei elastischerem Material kann die Dehnung im Betrieb zu Effizienzeinbußen führen.

Aus der EP 0 695 572 A2 ist ein Ölabscheider für Druckluft bekannt, der ein Gehäuse und ein innerhalb des Gehäuses angeordnetes Koaleszenzfilterelement aufweist. Das Koaleszenzfilterelement ist auf einen Stützkörper aufgebracht. Der Ölabscheider umfasst weiterhin ein Filterelement, das dem Koaleszenzfilterelement nachgeschaltet ist und von der entölten Druckluft durchströmt wird, wobei die ausgeschiedenen Bestandteile zurückgehalten werden.

Aus der deutschen Offenlegungsschrift DE 195 20 504 A1 ist ein Koaleszenzfilter bekannt, der unter anderem durch einen äußeren Stützmantel gekennzeichnet ist, d.h. ein äußerer Stützmantel umgibt ein innerhalb dieses Stützmantels liegendes Koaleszenzmaterial. Das Koaleszenzmaterial ist als eine sog. Zwischenlage gestaltet, die in plissierter Form an einem ebenso plissierten Filtermedium anliegt. Somit besteht der Filterkörper nach der DE 195 20 504 A1 aus einem Filtermedium und einer die Koaleszenzfunktion erfüllenden Zwischenlage, die gemeinsam plissiert und als einheitliche Lage verarbeitet und eingesetzt werden.

Es hat sich nun überraschend herausgestellt, dass die Filtereffizienz eines Koaleszenzfilters mit äußerem Stützmantel gesteigert werden kann, wenn die Koaleszenzschicht nicht Bestandteil des Filterkörpers ist, sondern vielmehr als separates Element innerhalb des Filterelements vorliegt. Der Filterkörper ist dabei derjenige Teil des Filterelements, der im Wesentlichen die Filtrierfunktion der Filtervorrichtung übernimmt. Gegenstand der Erfindung ist demnach ein Filterelement mit einem außenliegenden Stützmantel, der ein Filtermedium mit einer davon im Wesentlichen strukturell getrennten Koaleszenzschicht umgibt.

Unter der Terminologie "strukturell im Wesentlichen getrennt" wird im Sinne der vorliegenden Erfindung verstanden, dass die Koaleszenzschicht keinen (integralen) Teil des Filterkörpers einschließlich des Filtermediums darstellt und somit beispielsweise auch nicht in einem gemeinsamen Arbeitsgang mit dem Filtermedium ver- oder bearbeitet - beispielsweise plissiert - werden kann. Selbstverständlich aber kann die Koaleszenzschicht eine funktionale Einheit mit dem Filtermedium bilden.

Erfindungsgemäß liegt die Koaleszenzschicht dem Filtermedium im Wesentlichen nicht an. Vorteilhafterweise liegt die Koaleszenzschicht dem Filtermedium mit nur weniger als 50%, vorzugsweise mit weniger als 30%, insbesondere bevorzugt mit weniger als 10% seiner innenseitigen Oberfläche an. Erfindungsgemäß ist das Filtermedium plissiert, während die Koaleszenzschicht unplissiert ist.

Wie bereits ausgeführt, zeigt der Koaleszenzfilter eine gegenüber herkömmlichen Koaleszenzfiltern nochmals gesteigerte Filtereffizienz. Dies haben entsprechende Messungen nach der DIN ISO-Norm 12500 Teil 1 ("Filters for compressed air. Test method. Part 1: Oil Aerosols") und nach der DIN ISO 8573 Teil 2 ("Compressed air. Part 2: Test method for Aerosol Oil Content") ergeben.

Bei dem erfindungsgemäßen Filter können alle üblichen Materialien als Koaleszenzmaterial eingesetzt werden. Übliche Materialien sind u.a. Schaumstoff oder auch Polyesterfaservliese. Beispiele für weitere mögliche Koaleszenzmaterialien sind aus der DE 195 20 504 A1 bekannt.

Beispiele für geeignete Filtermedien sind dem Fachmann ebenso bekannt. So kann es sich dabei beispielsweise um Glasfaserpapier handeln. Glasfaserpapiere mit geeigneten Eigenschaften sind ebenso in der deutschen Offenlegungsschrift DE 195 20 504 A1 genannt.

Im Nachfolgenden wird die Erfindung anhand eines Ausführungsbeispiels des näheren erläutert. Darin zeigen:

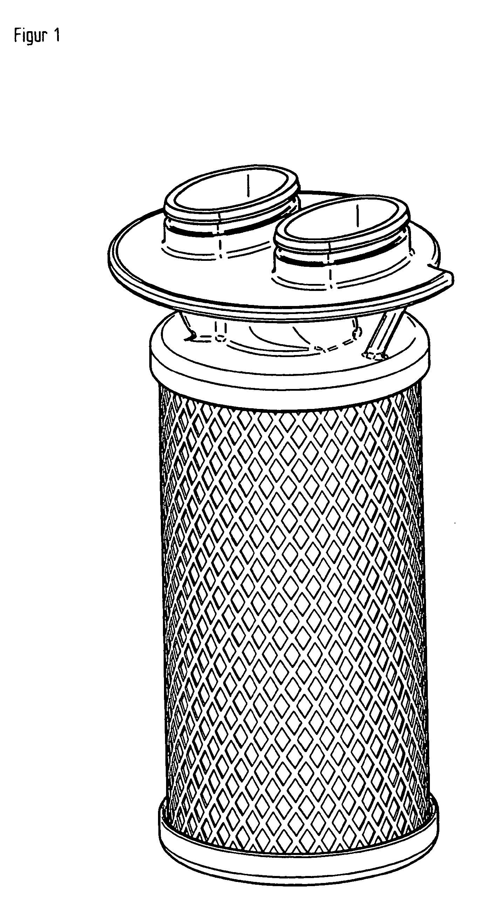

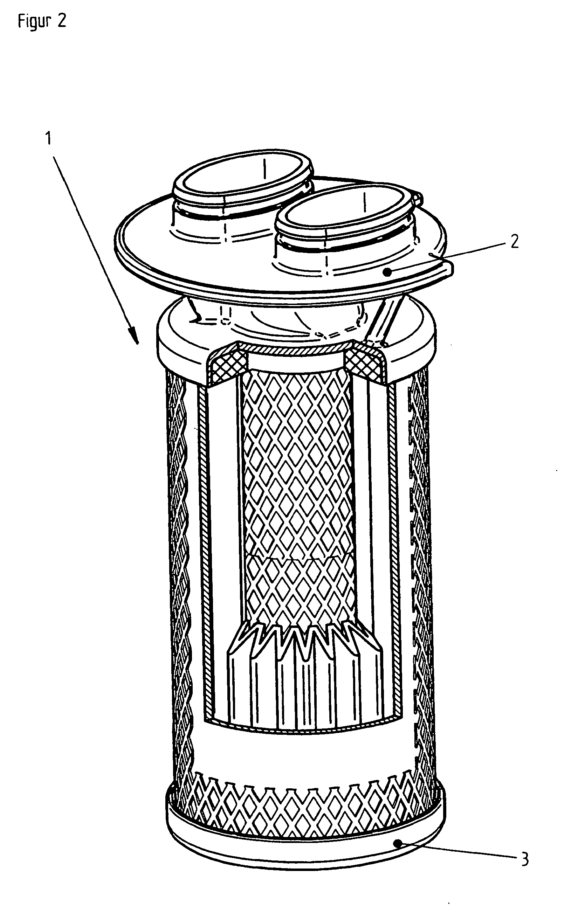

- Fig. 1: eine Gesamtansicht eines erfindungsgemäßen Filterelements;
- Eig. 2: einen Teilaufriss eines erfindungsgemäßen Filterelements und

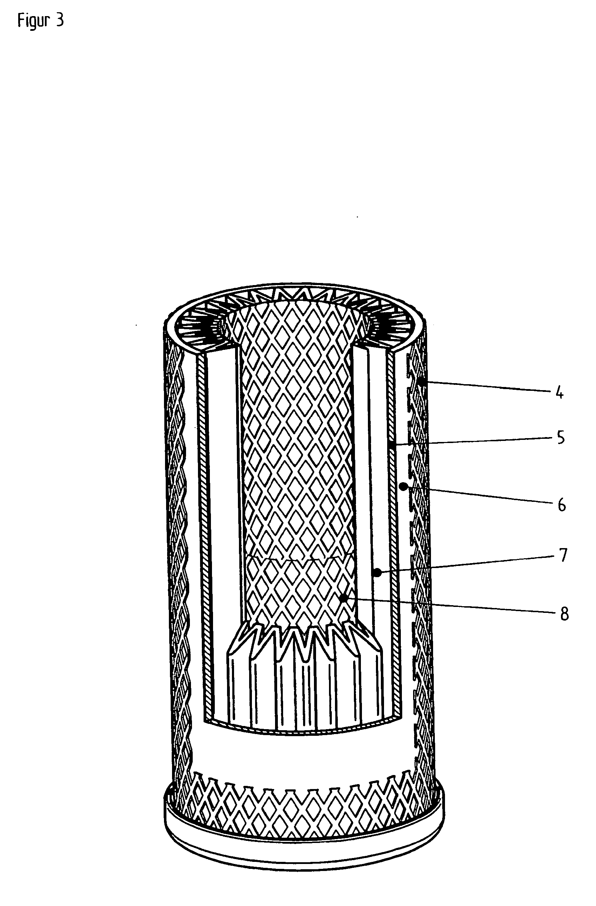

- Fig. 3: einen Querschnitt durch ein erfindungsgemäßes Filterelement.

Das erfindungsgemäße Filterelement 1 weist eine obere und eine untere Endkappe (2; 3) auf. Ein gitterartiger äußerer Stützmantel 4 umgibt den Koaleszenzmantel 5, der mit seiner äußeren Oberfläche 6 an dem äußeren Stützmantel 4 anliegt. Teile der innenseitigen Oberfläche des Koaleszenzmantels 5 liegen dem plissierten Filtermedium 7 an. Das plissierte Filtermedium ist innenseitig von einem inneren Stützmantel 8 gestützt. Auch dieser Stützmantel ist wie der äußere Stützmantel vorzugsweise gitterartig ausgestaltet und somit vollständig durchlässig.

## Patentansprüche

1. Filterelement (1) für einen Koaleszenzfilter mit einem äußeren Stützmantel (4), einer Koaleszenzschicht (5) und einem Filtermedium (7), wobei die Koaleszenzschicht direkt an dem Filtermedium (7) anliegt, **dadurch gekennzeichnet, dass** das Filtermedium (7) plissiert ist, während die Koaleszenzschicht (5) unplissiert ist, so dass die Koaleszenzschicht (5) mit weniger als 50% seiner innenseitigen Oberfläche dem Filtermedium (7) anliegt.

2. Filterelement (1) nach Anspruch 1, **dadurch gekennzeichnet, dass** die Koaleszenzschicht (5) mit weniger als 30%, bevorzugt mit weniger als 10% seiner innenseitigen Oberfläche dem Filtermedium (7) anliegt.

3. Filterelement nach Anspruch 1, **gekennzeichnet durch** einen inneren Stützmantel (8).

## Claims

1. Filter element (1) for a coalescing filter comprising an outer supporting structure (4), a coalescing layer (5) and a filter medium (7), wherein the coalescing layer directly abuts on the filter medium (7), **characterised in that** the filter medium (7) is pleated, while the coalescing layer (5) is not pleated, such that the coalescing layer (5) abuts on the filter medium (7) with less than 50% of its inner surface.

2. Filter element (1) according to claim 1, **characterised in that** the coalescing layer (5) abuts on the filter medium (7) with less than 30%, preferably with less than 10%, of its inner surface.

3. Filter element (1) according to claim 1, **characterised by** an inner supporting structure (8).

## Revendications

1. Elément filtrant (1) pour un filtre à coalescence avec une enveloppe de support extérieure (4), une couche de coalescence (5) et un milieu filtrant (7), la couche de coalescence étant directement en contact avec le milieu filtrant (7), **caractérisé en ce que** le milieu filtrant (7) est plissé tandis que la couche de coalescence (5) est non plissée, de sorte que la couche de coalescence (5) est en contact avec le milieu filtrant (7) par moins de 50 % de sa surface du côté intérieur.

2. Elément filtrant (1) selon la revendication 1, **caractérisé en ce que** la couche de coalescence (5) est en contact avec le milieu filtrant (7) par moins de 30 %, de préférence par moins de 10 % de sa surface du côté intérieur.

3. Elément filtrant (1) selon la revendication 1, **caractérisé par** une enveloppe de support intérieure (8).
